# EUROPÄISCHE PATENTSCHRIFT

(11) **EP 4 013 651 B1**
(45) Veröffentlichungstag und Bekanntmachung des Hinweises auf die Patenterteilung: **27.03.2024**
(21) Anmeldenummer: 20756827.0
(22) Anmeldetag: 12.08.2020
(51) Int. Cl.: B60T 8/1764, B62D 6/00, B60T 8/17

(54) **VERFAHREN ZUM STEUERN EINES FAHRZEUGES BEI EINER BREMSUNG MIT SEITENWEISE UNTERSCHIEDLICH WIRKENDEN BREMSKRÄFTEN, STEUERSYSTEM UND FAHRZEUG**
METHOD FOR CONTROLLING A VEHICLE BY DIFFERENT BRAKE FORCES ON LEFT AND RIGHT SIDES, ASSICIATED BRAKE SYSTEM AND VEHICLE
MÉTHODE DE COMMANDE D'UN VÉHICULE AYANT DES EFORS DE FREINAGE DIFFÈRENTS SELON LE COTÉ GAUCHE ET DROIT, SYSTÈME DE FREINAGE ASSOCIÉ ET VÉHICULE

(30) Priorität: 15.08.2019 DE 102019121969
(43) Veröffentlichungstag der Anmeldung: 22.06.2022
(73) Patentinhaber: ZF CV Systems Europe BV, 1170 Brüssel (BE)
(72) Erfinder: PLÄHN, Klaus, 30926 Seelze (DE); LÜLFING, Ralph-Carsten, 30826 Garbsen (DE)
(74) Vertreter: Rabe, Dirk-Heinrich
(86) Internationale Anmeldenummer: PCT/EP2020/072566
(87) Internationale Veröffentlichungsnummer: WO 2021/028455

(56) Entgegenhaltungen:
- EP-A1- 1 354 788
- EP-A2- 1 522 484
- WO-A1-2004/005093
- US-A1- 2012 253 602

## Beschreibung

Die Erfindung betrifft ein Verfahren zum Steuern eines Fahrzeuges bei einer Bremsung mit seitenweise unterschiedlich wirkenden Bremskräften an zumindest einer der Fahrzeugachsen, sowie ein Steuersystem und ein Fahrzeug.

Seitenweise unterschiedliche Bremskräfte können beispielsweise bei einer Bremsung eines Fahrzeuges auf einer Fahrbahn mit seitenweise unterschiedlichen Reibwerten auftreten. In diesem Fall kann es zu einer Gierbewegung des Fahrzeuges in eine Hochreibwert-Richtung kommen. Dies resultiert daraus, dass an den Rädern der Fahrzeugachsen in dieser Fahrsituation seitenweise unterschiedliche Bremskräfte angreifen. Vom ABS-Regelsystem können über ABS-Steuerventile seitenweise unterschiedliche Bremsdrücke eingestellt werden, um bei diesen seitenweise unterschiedlichen Bremskräften einem Blockieren radindividuell entgegenwirken zu können. Der Bremsdruck wird somit von den ABS-Steuerventilen radindividuell unterschiedlich stark bis zur jeweiligen Schlupfschwelle abgesenkt, um ein Blockieren des jeweiligen Rades zu verhindern.

Die Gierbewegung des Fahrzeuges bei einer Bremsung auf einer Fahrbahn mit seitenweise unterschiedlichen Reibwerten kann sich durch eine geometrieabhängige Lenkbewegung der lenkbaren Fahrzeugachse, insbesondere der Vorderachse, verstärken, wobei die Lenkbewegung aufgrund der seitenweise unterschiedlichen Bremskräfte automatisch auftritt und ebenfalls in die Hochreibwert-Richtung ausgerichtet ist. Insgesamt giert das Fahrzeug bei einer mue-Split-Bremsung also mit einer gewissen Brems-Gierrate, die aufgrund der seitenweise unterschiedlichen Bremskräfte bzw. Bremsdrücke sowie der daraus resultierenden automatischen Lenkbewegung auftritt.

Eine vergleichbare Situation kann auch ohne eine mue-Split-Bremsung vorliegen, wenn plötzlich eine unbeabsichtigt starke Verzögerung an einem der Vorderräder auftritt. Dies kann zum Beispiel dann der Fall sein, wenn eines der ABS-Steuerventile oder einer der Bremszylinder der Radbremsen, beispielsweise ein Rückstellmechanismus des Bremszylinders, an den Vorderrädern einen Defekt aufweist. Weiterhin kann auch ein zerstörtes Radlager vorliegen. Auch andere Defekte sind denkbar, die dazu führen, dass sich unerwarteterweise seitenweise unterschiedliche Bremskräfte an der lenkbaren Vorderachse einstellen und somit eine seitenweise unterschiedlich starke Abbremsung des Fahrzeuges erfolgt. Auch in einer solchen Situation kommt es zu einer Gierbewegung des Fahrzeuges in die entsprechende Richtung, wobei diese Gierbewegung durch eine Lenkbewegung der lenkbaren Vorderachse verstärkt werden kann, wobei die Lenkbewegung aufgrund der seitenweise unterschiedlichen Bremskräfte automatisch auftritt. Insgesamt giert das Fahrzeug bei einer solchen Bremsung mit seitenweise unterschiedlichen Bremskräften an der Vorderachse also ebenfalls mit einer gewissen Brems-Gierrate, die aufgrund der seitenweise unterschiedlichen Bremskräfte bzw. Bremsdrücke sowie der daraus resultierenden automatischen Lenkbewegung auftritt.

Um das Fahrzeug in den genannten Situationen in der Spur zu halten und eine folgende Instabilität zu vermeiden, ist der resultierenden Brems-Gierrate mit einem entsprechenden Lenkeingriff durch den Fahrer vollständig entgegenzuwirken, so dass die Ist-Gierrate des Fahrzeuges auf eine vor der Bremsung mit seitenweise unterschiedlichen Bremskräften an der Vorderachse wirkenden Soll-Gierrate eingestellt wird. Herkömmlicherweise sind Fahrer in derartigen unerwarteten Situationen überfordert, da sie nur selten auftreten. Ein Gegenlenken bei hohen Fahrzeuggeschwindigkeiten erfordert nämlich einen sofortigen und ausreichenden Lenkeingriff, um das Fahrzeug in der Spur zu halten. Meist wird allerdings mit einer sehr hohen Reaktionszeit und/oder nicht ausreichend reagiert, so dass ein Verlassen der Spur sehr wahrscheinlich ist. Dadurch werden der umliegende Verkehr und auch das eigene Fahrzeug gefährdet.

Herkömmliche automatisierte Stabilitätsregelsysteme mit alleinigem Zugriff auf die Betriebsbremse können der resultierenden Brems-Gierrate in den o.g. Situationen nicht entgegenwirken, da sie die Lenkbewegung der lenkbaren Fahrzeugachse, die aus der Bremsung mit seitenweise unterschiedlichen Bremskräften resultieren, nicht von einem vom Fahrer vorgegebenen Lenkwinkel unterscheiden können. Das Stabilitätsregelsystem vergleicht somit die Ist-Gierrate bzw. die aus der Bremsung resultierende Brems-Gierrate mit der aufgrund des aktuell eingestellten Lenkwinkels zu erwartenden Soll-Gierrate und stellt fest, dass diese zusammenpassen. Dadurch wird kein instabiler Zustand erfasst und nicht automatisiert eingegriffen.

Um dem entgegenzuwirken, ist in DE 10 2007 038 575 B4 beschrieben, bei Erkennen eines Untersteuervorganges oder eines Übersteuervorganges oder des Beginns eines Untersteuervorganges oder eines Übersteuervorganges der Lenkwinkel der lenkbaren Fahrzeugachse vergrößert bzw. verkleinert wird, um der aus der Bremsung resultierenden Brems-Gierrate durch einen Lenkeingriff entgegenzuwirken.

In DE 10 2011 120 667 ist vorgesehen, dass bei einer erkannten Kippneigung eines Fahrzeuges, infolge derer Bremsen seitenindividuell angesteuert werden, zusätzlich auch der Lenkwinkel einer gelenkten Fahrzeugachse vergrößert oder verkleinert wird, um einem aufgrund der seitenindividuellen Bremsansteuerung resultierenden Übersteuern oder Untersteuern entgegenzuwirken.

Nachteilig bei beiden genannten Lenkeingriffen ist jedoch, dass erst dann eingegriffen wird, wenn bereits ein instabiler Zustand des Fahrzeuges vorliegt. Dies kann je nach Fahrzeuggeschwindigkeit aber bereits zu spät sein, so dass das Fahrzeug seine Spur bereits verlassen hat und eine Instabilität unter Umständen nicht mehr verhindert werden kann, da das Fahrzeug nicht mehr unter Kontrolle gebracht werden kann, ohne den umliegenden Verkehr oder das eigene Fahrzeug zu gefährden.

EP 1 354 788 A1 zeigt eine motorbetriebene Lenksteuerung zum Steuern eines Lenkrads eines Fahrzeugs. Die Steuerung umfasst eine Lenkdrehmoment-Steuereinheit, eine Bremskraft-Schätzeinheit, eine rechte und linke Bremskraftdifferenz-Schätzeinheit und eine Hilfslenkdrehmoment-Bereitstellungseinheit. Die Lenkdrehmoment-Steuereinheit steuert ein Lenkdrehmoment am Lenkrad in Abhängigkeit von einer Lenkbetätigung. Die Bremskraftschätzeinheit schätzt Bremskräfte, die auf Räder des Fahrzeugs ausgeübt werden sollen. Die Hilfslenkmoment-Bereitstellungseinheit liefert ein Hilfslenkmoment für die Lenkmoment-Steuereinheit auf der Grundlage der Bremskraftdifferenz zwischen rechten und linken Rädern, die von der rechten und linken Bremskraftdifferenz-Schätzeinheit geschätzt wird.

WO 2004/005093 A1 zeigt ein Verfahren zum Erhöhen der Fahrstabilität eines Fahrzeugs bei gebremster Fahrt, bei dem anhand von mehreren Eingangsgrössen Kompensations-Lenkwinkel für ein regelbares und/oder steuerbares Lenksystem ermittelt werden, so dass durch Lenkeingriffe die Fahrstabilität des Fahrzeugs erhöht wird. Um eine komfortablere Regelung zu erreichen, ist vorgesehen, dass bei den Lenkeingriffen mindestens zwei Störgrössen-Kompensationsanteile bei den Kompensations-Lenkwinkeln berücksichtigt werden, von denen ein Störgrössen-Kompensationsanteil aus dem Bahnverlauf des Fahrzeugs ermittelt wird.

US 2012/253602 A1 zeigt eine Fahrzeugsteuervorrichtung mit: einer Bremskraftaufbringvorrichtung eines hydraulischen Typs, die in der Lage ist, eine Bremskraft auf jedes der Räder aufzubringen, eine Hydraulikdrucksteuervorrichtung, die einen Hydraulikdruck der Bremskraftaufbringvorrichtung so steuert, dass jedes der Räder nicht blockiert, eine Hydraulikdruckerhöhungs- oder -verringerungsperioden-Änderungsvorrichtung, die eine Erhöhungs- oder Verringerungsperiode des Hydraulikdrucks ändert, der durch die Hydraulikdruck-Steuervorrichtung gesteuert wird, und eine Steuervorrichtung zum Steuern der Hydraulikdruckerhöhungs- oder - verringerungsperioden-Änderungsvorrichtung, um die Erhöhungs- oder Verringerungsperiode des Hybriddrucks entsprechend jedem der Räder in Kontakt mit einer Straßenoberfläche mit einem hohen Straßenoberflächen-Reibungskoeffizienten zu ändern.

EP 1 522 484 A2 zeigt eine Lenksteuervorrichtung, die einen Lenkbetrag erhält, um den ein gelenktes Rad gelenkt wird, basierend auf einem Links-Rechts-Bremskraftdifferenz-Steuerbetrag, einem Fahrzeugzustands-Steuerbetrag und einem Lenksteuerbetrag. Die Vorrichtung ändert die Größe des Bremskraftdifferenz-Steuerbetrags und die Größe des Fahrzeugzustands-Steuerbetrags gemäß einer Fahrzeuggeschwindigkeit oder einer Zeit, die verstrichen ist, seit das Bremsen begonnen hat, auf das linke und das rechte Rad ausgeübt zu werden.

Aufgabe der Erfindung ist daher, ein Verfahren zum Steuern eines Fahrzeuges anzugeben, mit dem sicherheitskritische Situationen während einer Bremsung mit seitenweise unterschiedlichen Bremskräften vermieden werden können. Aufgabe ist weiterhin ein Steuersystem und ein Fahrzeug anzugeben.

Diese Aufgabe wird durch ein Verfahren nach dem beigefügten unabhängigen Anspruch 1 sowie ein Steuersystem nach dem beigefügten unabhängigen Anspruch 14, und ein Fahrzeug nach dem weiteren beigefügten Anspruch 15 gelöst. Die Unteransprüche geben bevorzugte Weiterbildungen an.

Erfindungsgemäß ist demnach vorgesehen, zum Steuern eines Fahrzeuges bei einer unerwarteten Bremsung mit seitenweise unterschiedlich wirkenden Bremskräften an einer lenkbaren Fahrzeugachse zunächst festzustellen, ob eine unbeabsichtigte Bremsung mit seitenweise unterschiedlich wirkenden Bremskräften an der lenkbaren Fahrzeugachse vorliegt, wobei das Fahrzeug aufgrund der seitenweise unterschiedlich wirkenden Bremskräfte an der lenkbaren Fahrzeugachse mit einer Brems-Gierrate in eine Gier-Richtung giert, und daraufhin die Gier-Richtung zu ermitteln, in die das Fahrzeug infolge der seitenweise unterschiedlich wirkenden Bremskräfte gieren wird. Weiterhin wird eine Lenkwinkel-Anforderung vorgegeben und eingestellt sobald bzw. unmittelbar nachdem eine unbeabsichtigte Bremsung mit seitenweise unterschiedlich wirkenden Bremskräften an der lenkbaren Fahrzeugachse festgestellt wurde, wobei die Lenkwinkel-Anforderung in Abhängigkeit der ermittelten Gier-Richtung derartig vorgegeben wird, dass die Brems-Gierrate nach einem Einstellen der Lenkwinkel-Anforderung an der lenkbaren Fahrzeugachse kompensiert wird.

Vorteilhafterweise wird somit bereits dann automatisiert eingegriffen, wenn eine unbeabsichtigte bzw. unerwartete Bremsung mit seitenweise unterschiedlich wirkenden Bremskräften an der lenkbaren Fahrzeugachse erkannt wurde, und zwar unmittelbar darauffolgend und unabhängig davon, wie stark die daraus resultierende Brems-Gierrate ist und ob ein instabiler Fahrzustand vorliegt. Somit kann bei festgestellter unerwarteter bzw. unbeabsichtigter Bremsung zeitgleich mit dem Ausbilden der seitenweise unterschiedlichen Bremskräfte gegengelenkt werden, um der Brems-Gierrate sofort entgegenzuwirken bzw. diese zu kompensieren. Ein Verlassen der Spur und ein eventuell folgender instabiler Fahrzustand kann also von vornherein verhindert werden, da auch bereits bei kleinen Gierbewegungen des Fahrzeuges infolge der unbeabsichtigten bzw. unerwarteten Bremsung mit seitenweise unterschiedlichen Bremskräften lenkend eingegriffen wird, so dass sich ein Spurverlassen und Instabilitäten gar nicht erst entwickeln können. Ein Ausbrechen des Fahrzeuges bzw. ein Verlassen der Spur infolge eines Übersteuerns oder eines Untersteuerns kann somit nicht mehr auftreten, da nicht wie im Stand der Technik erst dann eingegriffen wird, wenn eine Instabilität erkannt wurde und diese demnach bereits vorliegt.

Eine unerwartete bzw. unbeabsichtigte Bremsung mit seitenweise unterschiedlichen Bremskräften wird hierbei verstanden als Bremsung, bei der aufgrund von nicht gewollten Einflüssen plötzlich unerwartet einseitige Bremskräfte induziert werden, auf die der Fahrer nicht eingestellt ist. Diese können aufgrund eines aktiven Bremseingriffes z.B. bei einer mue-Split-Bremsung auf einer Fahrbahn mit unterschiedlichen Reibwerten auftreten oder aber mit oder ohne aktiven Bremseingriff auch aufgrund eines Defekts oder eines Ausfalls an einer die Bremskraft an der lenkbaren Fahrzeugachse radindividuell beeinflussenden Komponente des Fahrzeuges.

Demnach kann eine unerwartete bzw. unbeabsichtigte Bremsung auftreten aufgrund eines Defektes oder eines Ausfalls an zumindest einem der den gebremsten Rädern der lenkbaren Fahrzeugachse zugeordneten ABS-Steuerventile oder den Radbremsen und/oder aufgrund eines Defektes oder eines Ausfalls an zumindest einem Radlager der gebremsten Räder der lenkbaren Fahrzeugachse. Es sind aber auch weitere Komponenten denkbar, die aufgrund eines Defektes oder eines Ausfalls einen radindividuellen Einfluss auf die Bremskraft an der lenkbaren Fahrzeugachse haben können.

Durch einen solchen Defekt oder Ausfall oder eine mue-Split-Bremsung wird ein Gieren des Fahrzeuges mit einer bestimmten Brems-Gierrate bewirkt, auf die sich der Fahrer nicht einstellen kann, wobei das Gieren jeweils in die Richtung der höheren Bremskraft ausgerichtet ist. Gleichzeitig wird durch die seitenweise unterschiedlichen Bremskräfte an der lenkbaren Fahrzeugachse auch ein Lenkwinkel der lenkbaren Fahrzeugachse in die Gier-Richtung verstellt, was den Effekt noch verstärkt.

Vorzugsweise ist hierbei vorgesehen, dass eine unbeabsichtigte Bremsung mit seitenweise unterschiedlich wirkenden Bremskräften an der lenkbaren Vorderachse festgestellt wird. Vorzugsweise ist aber auch eine andere lenkbare Fahrzeugachse denkbar.

Im Falle eines Defektes oder eines Ausfalls, kann eine unbeabsichtigte Bremsung mit seitenweise unterschiedlich wirkenden Bremskräften an der lenkbaren Fahrzeugachse auch ohne das Vorliegen einer Bremsvorgabe festgestellt werden. Normalerweise wird jedoch nur bei Vorliegen einer Bremsvorgabe geprüft, ob es zu einer unbeabsichtigten Bremsung mit seitenweise unterschiedlichen Bremskräften kommt.

Gemäß einer bevorzugten Ausführungsform ist vorgesehen, dass die Lenkwinkel-Anforderung an der lenkbaren Fahrzeugachse im Rahmen einer Lenkregelung derartig vorgegeben und eingestellt wird, dass sich eine aktuell vorliegende Ist-Gierrate an eine vorgegebene Soll-Gierrate annähert, insbesondere bis die Ist-Gierrate der vorgegebenen Soll-Gierrate entspricht. Somit wird vorteilhafterweise eine derartige Lenkwinkel-Anforderung vorgegeben, durch die das Fahrzeug in der Spur gehalten wird, wobei bei einem Auftreten einer Brems-Gierrate und somit einer unbeabsichtigten Bremsung mit seitenweise unterschiedlichen Bremskräften sofort eine entsprechende Lenkwinkel-Anforderung ausgegeben und eingestellt wird, durch die die Ist-Gierrate in Richtung der Soll-Gierrate eingeregelt wird. Das Einregeln kann hierbei nach Art eines PI-Reglers erfolgen, so dass eine schnelle aber auch sprungfreie automatisierte Lenkung erfolgt.

Gemäß einer bevorzugten Weiterbildung ist hierbei vorgesehen, dass die Soll-Gierrate aus einer Ist-Gierrate abgeleitet wird, die im Fahrzeug vorliegt, bevor eine unerwartete Bremsung mit seitenweise unterschiedlich wirkenden Bremskräften an der lenkbaren Fahrzeugachse festgestellt wurde. Somit können Lenkbewegungen, die vor der unbeabsichtigten Bremsung vorliegen, beispielsweise Kurvenfahrten, in einfacher Weise als Ausgangszustand angenommen werden, auf die bei einer unbeabsichtigten Bremsung gemäß der Erfindung geregelt wird.

Vorzugsweise ist weiterhin vorgesehen, dass das Feststellen, ob eine unerwartete Bremsung mit seitenweise unterschiedlich wirkenden Bremskräften an einer lenkbaren Fahrzeugachse vorliegt
- in Abhängigkeit einer Bremsdruckdifferenz zwischen Bremsdrücken an den seitenweise unterschiedlich gebremsten Rädern der lenkbaren Fahrzeugachse erfolgt und/oder
- in Abhängigkeit einer Raddrehzahldifferenz zwischen Raddrehzahlen an den seitenweise unterschiedlich gebremsten Rädern der lenkbaren Fahrzeugachse und/oder
- in Abhängigkeit einer Radgeschwindigkeitsdifferenz zwischen Radgeschwindigkeiten an den seitenweise unterschiedlich gebremsten Rädern der lenkbaren Fahrzeugachse erfolgt. Somit kann in einfacher Weise und anhand von ohnehin im Fahrzeug erfassten Messgrößen erkannt werden, ob eine unbeabsichtigte Bremsung vorliegt, wobei die Bremsdruckdifferenz und die Raddrehzahldifferenz und die Radgeschwindigkeitsdifferenz genaue und aktuelle Indikatoren für das Vorliegen einer unbeabsichtigten Bremsung sind.

Vorzugsweise kann dazu vorgesehen sein, dass auf eine unerwartete Bremsung mit seitenweise unterschiedlich wirkenden Bremskräften an einer lenkbaren Fahrzeugachse geschlossen wird, wenn die Bremsdruckdifferenz eine maximale Bremsdruckdifferenz und/oder die Raddrehzahldifferenz eine maximale Raddrehzahldifferenz und/oder die Radgeschwindigkeitsdifferenz eine maximale Radgeschwindigkeitsdifferenz übersteigt. Dadurch kann der Eingriffszeitpunkt genau festgelegt werden und unter Umständen eine entsprechende Differenz auch zugelassen werden, die in normalen Fahrsituationen unkritisch ist.

Gemäß einer Weiterbildung ist vorgesehen, dass auch das Ermitteln der Gier-Richtung in Abhängigkeit der Bremsdruckdifferenz und/oder der Raddrehzahldifferenz und/oder der Radgeschwindigkeitsdifferenz erfolgt. Je nach Vorzeichen dieser Differenzen kann in einfacher Weise die Richtung der Gierbewegung des Fahrzeuges infolge der unbeabsichtigten Bremsung erkannt und vorteilhafterweise auch vorausgesagt werden. Denn anhand der Bremsdruckdifferenz, die sich bei den unterschiedlichen Bremskräften einstellt, oder auch den anderen Differenzen kann unmittelbar erkannt werden, in welche Gier-Richtung das Fahrzeug beginnen wird zu gieren, wenn nicht lenkend eingegriffen wird. Dadurch kann zeitglich mit dem Aufbau der Bremsdruckdifferenz gegengelenkt werden, noch bevor sich eine Brems-Gierrate aufgebaut hat. Somit kann noch schneller reagiert werden.

Gemäß einer bevorzugten Weiterbildung kann bei funktionierenden ABS-Steuerventilen die Bremsdruckdifferenz aus ABS-Steuersignalen abgeschätzt werden, wobei die an die Radbremsen ausgesteuerten Bremsdrücke über die ABS-Steuerventile in Abhängigkeit der ABS-Steuersignale seitenindividuell angepasst werden zum Ausbilden einer Bremsdruckdifferenz, und/oder die Raddrehzahldifferenz und/oder die Radgeschwindigkeitsdifferenz aus über Raddrehzahlsensoren an den einzelnen Rädern ermittelten und ausgegebenen Raddrehzahlen ermittelt wird.

Somit kann in einfacher Weise auf die Bremsdruckinformation und die Raddrehzahlinformation zurückgegriffen werden, ohne zusätzliche Sensoren einzusetzen. Die Bremsdruckinformation lässt sich hierbei aus einem an die ABS-Steuerventile vorgebebenen Vordruck und Ansteuerzeiten der jeweiligen ABS-Steuerventile, über die ein Druckhalten oder ein Druckreduzieren des Bremsdruckes erfolgt, abschätzen. Liegt demnach ein niedriger Reibwert vor, muss das jeweilige ABS-Steuerventil häufiger eingreifen, um ein Blockieren zu verhindern als ein ABS-Steuerventil an der Seite mit dem hohen Reibwert, woraus auf den Bremsdruck und darüber auf eine Bremsdruckdifferenz zwischen den Rädern einer Fahrzeugachse geschlossen werden kann.

Vorzugsweise ist weiterhin vorgesehen, dass die Lenkwinkel-Anforderung über ein elektrisch steuerbares Lenksystem an einer lenkbaren Fahrzeugachse, vorzugsweise der Vorderachse, automatisiert umgesetzt wird. Somit kann auf die schnellen Reaktionszeiten einer automatisierten Lenkung zurückgegriffen werden, um das Fahrzeug bei einer unbeabsichtigten und unerwarteten Bremsung zu steuern.

Vorzugsweise ist weiterhin vorgesehen, dass die Lenkwinkel-Anforderung in Abhängigkeit einer Bereifung des Fahrzeuges und/oder einer Fahrbahnbeschaffenheit und/oder einer Achslast und/oder einer Spurweite sowie einem Lenkrollhalbmesser der lenkbaren Fahrzeugachse und/oder einer Fahrzeuggeschwindigkeit vorgegeben wird. Somit können vorteilhafterweise auch weitere Kriterien berücksichtigt werden, die eine Auswirkung auf das Bremsverhalten auf einer Fahrbahn mit unterschiedlichen Reibwerten haben und die somit einen Einfluss auf das automatisierte Eingreifen in die Lenkung haben können.

Vorzugsweise ist weiterhin vorgesehen, dass der Lenkwinkel der lenkbaren Fahrzeugachse in Abhängigkeit eines über ein Lenkrad eingesteuerten Lenkmomentes eingestellt werden kann, wobei infolge des eingesteuerten Lenkmomentes eine Fahrer-Gierrate auf das Fahrzeug wirkt, wobei das eingesteuerte Lenkmoment zugelassen wird, wenn die wirkende Fahrer-Gierrate der Brems-Gierrate entgegengerichtet ist und sonst unterdrückt wird. Damit können auch manuelle Lenkeingriffe über das Lenkrad zugelassen werden, insofern diese kein Spurverlassen oder keine Instabilitäten verursachen und der unbeabsichtigten bzw. unerwarteten Bremsung entgegenwirken. Dadurch kann auch ein bremsendes Ausscheren bzw. Überholen ermöglicht werden, falls dies nicht zu einer Verstärkung der Brems-Gierrate führt.

Das erfindungsgemäße Steuersystem zum Steuern eines Fahrzeuges bei einer unerwarteten Bremsung mit seitenweise unterschiedlich wirkenden Bremskräften an einer lenkbaren Fahrzeugachse, mit dem insbesondere das erfindungsgemäße Verfahren ausgeführt werden kann, weist ein elektronisch steuerbares Bremssystem und ein elektronisch steuerbares Lenksystem zum Einstellen einer Lenkwinkel-Anforderung an einer lenkbaren Fahrzeugachse auf, wobei erfindungsgemäß vorgesehen ist, dass das Steuersystem ausgebildet ist,
- Festzustellen, ob eine unbeabsichtigte Bremsung mit seitenweise unterschiedlich wirkenden Bremskräften an einer lenkbaren Fahrzeugachse vorliegt, und die Gier-Richtung, in die das Fahrzeug infolge der seitenweise unterschiedlich wirkenden Bremskräfte giert, zu ermitteln; und
- eine Lenkwinkel-Anforderung vorzugeben und über das elektronisch steuerbare Lenksystem einzustellen sobald eine unbeabsichtigte Bremsung mit seitenweise unterschiedlich wirkenden Bremskräften an der lenkbaren Fahrzeugachse festgestellt wurde,
wobei die Lenkwinkel-Anforderung in Abhängigkeit der ermittelten Gier-Richtung derartig vorgegeben werden kann, dass die Brems-Gierrate nach einem Einstellen der Lenkwinkel-Anforderung an einer lenkbaren Fahrzeugachse kompensiert werden kann.

Erfindungsgemäß ist weiterhin ein Fahrzeug mit einem derartigen Steuersystem vorgesehen.

Die Erfindung wird im Folgenden anhand mehrerer Figuren näher erläutert. Es zeigen:
- Fig. 1: ein Fahrzeug mit einem elektronisch steuerbaren Bremssystem und einem elektronisch steuerbaren Lenksystem; und
- Fig. 2: ein Flussdiagram des erfindungsgemäßen Verfahrens.

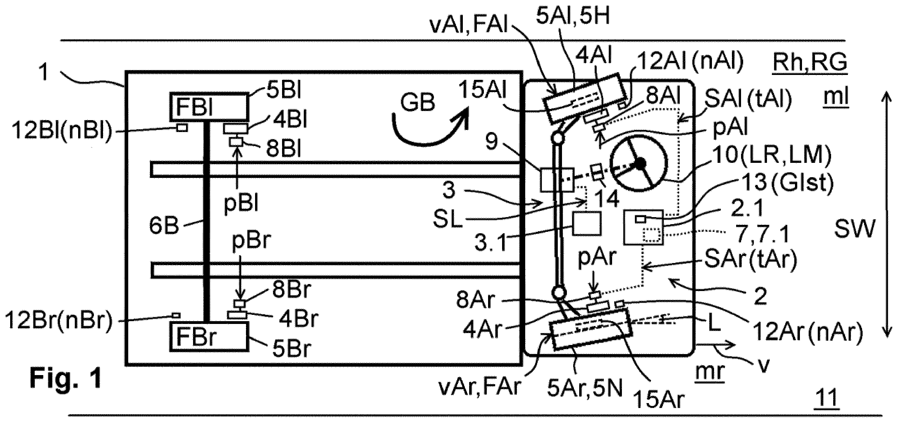

Fig. 1 zeigt schematisch ein Fahrzeug 1 mit einem elektronisch steuerbaren Bremssystem 2 und einem elektronisch steuerbaren Lenksystem 3, die zusammen ein Steuersystem 100 zum Steuern eines Fahrzeuges 1 während einer Bremsung des Fahrzeuges 1 mit seitenweise unterschiedlich wirkenden Bremskräften FAr, FAI insbesondere an einer Vorderachse 6A des Fahrzeuges 1 ausbilden. Das elektronisch steuerbare Bremssystem 2 weist in bekannter Weise eine Bremssteuereinrichtung 2.1 auf, die Radbremsen 4Ar, 4Al, 4Br, 4Bl an den einzelnen Rädern 5Ar, 5Al, 5Br, 5Bl der Fahrzeugachsen 6A, 6B radindividuell ansteuern kann, um das Fahrzeug 1 gemäß einer manuellen oder einer automatisierten Bremsvorgabe BV abzubremsen, indem bestimmte Bremskräfte FAr, FAI, FBr, FBI an den jeweiligen Rädern 5Ar, 5Al, 5Br, 5Bl eingestellt werden. Die Abbremsung wird hierbei von einem Stabilitätsregelsystem 7 überwacht, das die Stabilität des Fahrzeuges 1 bewertet und entsprechend eingreift, um eine Instabilität zu vermeiden oder einer solchen entgegenzuwirken.

Ein Bestandteil des Stabilitätsregelsystems 7 ist dabei insbesondere ein ABS-Regelsystem 7.1, das in Abhängigkeit von ermittelten Raddrehzahlen nAr, nAl, nBr, nBl der einzelnen Räder 5Ar, 5Al, 5Br, 5Bl den Schlupfwert überwacht und bei einem drohendem Blockieren eines oder mehrerer Räder 5Ar, 5Al, 5Br, 5Bl den an die Radbremsen 4Ar, 4Al, 4Br, 4Bl ausgesteuerten Bremsdruck pAr, pAl, pBr, pBl über ABS-Steuerventile 8Ar, 8Al, 8Br, 8Bl rad-individuell anpasst. Über die ABS-Steuerventile 8Ar, 8Al, 8Br, 8Bl kann der Bremsdruck pAr, pAl, pBr, pBl beispielsweise gehalten oder reduziert wer-den, um ein Blockieren der Räder 5Ar, 5Al, 5Br, 5Bl zu vermeiden. Die ABS-Steuerventile 8Ar, 8Al, 8Br, 8Bl weisen dazu beispielsweise Einlassventil-Auslassventil-Kombinationen auf.

Die ABS-Steuerventile 8Ar, 8Al, 8Br, 8Bl werden z.B. von der Bremssteuereinrichtung 2.1 in gewissen Regelzyklen über ein ABS-Steuersignal SAr, SAI, SBr, SBI radindividuell angesteuert, um ein Druckhalten oder ein Druckreduzieren an der jeweiligen Radbremse 4a, 4b zu erreichen. Die ABS-Steuerlogik für die jeweiligen Fahrzeugachsen 6A, 6B kann hierbei aber auch in einem elektronisch steuerbaren Achsmodul integriert sein, das die entsprechenden ABS-Steuersignale SAr, SAI, SBr, SBI erzeugt.

Neben dem Bremssystem 2 ist das elektronisch steuerbare Lenksystem 3 vorgesehen, über das ein Lenkwinkel L der Räder 5Ar, 5Al, 5Br, 5Bl einer lenkbaren Fahrzeugachse 6A, 6B, vorzugsweise der Vorderachse 6A oder einer weiteren Zusatzachse, automatisiert über einen Lenkaktuator 9 verstellt werden kann. Im Folgenden wird dies anhand der lenkbaren Vorderachse 6A beschrieben. Dazu ist eine Lenksteuereinrichtung 3.1 vorgesehen, die dem Lenkaktuator 9 Lenksignale SL vorgeben kann. Weiterhin kann der Lenkwinkel L der Vorderräder 5Ar, 5Al an der Vorderachse 6A aber auch manuell vom Fahrer über ein Lenkrad 10 verstellt werden, indem dieser ein bestimmtes Lenkmoment LM in eine Lenkrichtung LR aufbringt. Die Lenkung der Vorderachse 6A kann in dem Fall z.B. durch eine Überlagerungslenkung erfolgen.

Bewegt sich das Fahrzeug 1 mit einer bestimmten Fahrzeuggeschwindigkeit v auf einer Fahrbahn 11 mit seitenweise unterschiedlichen Reibwerten ml, mr und werden insbesondere die Radbremsen 4Ar, 4Al an der Vorderachse 6A über das Bremssystem 2 infolge einer Bremsvorgabe BV betätigt, so wirken an den Vorderrädern 5Ar, 5Al bei der seitenindividuellen ABS-Regelung unterschiedlich starke Bremskräfte FAr, FAI. Das ABS-Regelsystem 7.1 sorgt dabei durch unterschiedliche Regelzyklen bzw. durch seitenindividuell unterschiedliche ABS-Steuersignale SAr, SAI dafür, dass unterschiedliche Bremsdrücke pAr, pAl an die Radbremsen 4Ar, 4Al der Vorderräder 5Ar, 5Al ausgesteuert werden, um ein Blockieren der Vorderräder 5Ar, 5Al auf der Fahrbahn 11 mit den seitenindividuell unterschiedlichen Reibwerten ml, mr zu vermeiden. Dies ist auch als mue-Split-Bremsung Bmu (µ-Sptit-Bremsung) bekannt. Das Vorderrad 5Ar, 5Al, das sich auf der Seite der Fahrbahn 11 mit dem höheren der beiden Reibwerte ml, mR befindet, wird dabei im Folgenden als Hochreibwert-Vorderrad 5HA und das Vorderrad 5Ar, 5Al, das sich auf der Seite der Fahrbahn 11 mit dem niedrigeren der beiden Reibwerte ml, mR befindet im Folgenden als Niedrigreibwert-Vorderrad 5NA bezeichnet.

Aufgrund der Aussteuerung von unterschiedlichen Bremsdrücken pAr, pAl an die Radbremsen 4Ar, 4Al der Vorderräder 5Ar, 5Al und der dadurch seitenweise unterschiedlich wirkenden Bremskräfte FAr, FAI auf die Vorderachse 6A des Fahrzeuges 1 wird ein gewisses Gieren des Fahrzeuges 1 mit einer Brems-Gierrate GB bewirkt, die insbesondere abhängig von einer Spurweite SW der Vorderachse 6A ist. Die Brems-Gierrate GB ist hierbei in eine Hochreibwert-Richtung Rh ausgerichtet, d.h. das Fahrzeug 1 giert in die Richtung des Hochreibwert-Vorderrades 5HA; im Beispiel der Fig. 1 also in Fahrtrichtung nach links. Gleichzeitig wird bei einer solchen mue-Split-Bremsung Bmu aufgrund der unterschiedlich eingestellten Bremsdrücke pAr, pAl auch eine Lenkbewegung mit einem bestimmten Lenkwinkel L an der Vorderachse 6A induziert, wenn die Vorderräder 5Ar, 5Al abgebremst werden, wobei die Lenkbewegung ebenfalls in die Hochreibwert-Richtung Rh ausgerichtet ist. Der induzierte Lenkwinkel L ist hierbei insbesondere abhängig von einer Reibwert-Differenz dm = ml - mr, wobei diese wiederum mit einer Bremsdruckdifferenz dp = pAl - pAr bzw. auch einer Raddrehzahldifferenz dn = nAl - nAr abhängig ist. Weiterhin ist der Lenkwinkel L abhängig von der Fahrzeuggeometrie, beispielsweise einem Lenkrollhalbmesser (Lenkrollradius).

Vergleichbare unerwartete und unbeabsichtigte Bremssituationen mit seitenweise unterschiedlichen Bremskräften FAr, FAI an der lenkbaren Vorderachse 6A können aber grundsätzlich auch ohne einen aktiven Bremseingriff über das ABS-Regelsystem 7.1 aufgrund einer mue-Split-Bremsung Bmu vorliegen. Eine einseitig starke Bremskraftveränderung an der Vorderachse 6A kann beispielsweise auch dann eintreten, wenn zumindest eines der den Vorderrädern 5Ar, 5Al zugeordneten ABS-Steuerventile 8Ar, 8Al oder eine der Radbremsen 4Ar, 4Al (Bremszylinder) an den Vorderrädern 5Ar, 5Al einen Defekt aufweist. Auch dadurch können sich unerwarteterweise unterschiedliche Bremsdrücke pAl, pAr bzw. seitenweise unterschiedliche Bremskräfte FAr, FAI und demnach unterschiedliche Raddrehzahlen nAl, nAr an den Vorderrädern 5Ar, 5Al ergeben. Weiterhin kann es auch infolge eines Defektes an einem der Radlager 15Ar, 15Al der Vorderräder 5Ar, 5Al zu einer einseitigen Veränderung in den Bremskräften FAr, FAI an der Vorderachse 6A kommen, wobei sich auch in dieser Situation unterschiedliche Raddrehzahlen nAl, nAr an den Vorderrädern 5Ar, 5Al einstellen.

Allgemein kann es demnach auch zu einer unerwarteten einseitigen Veränderung in den Bremskräften FAr, FAI an der Vorderachse 6A kommen, wenn ein Defekt oder ein Ausfall an einer die Bremskraft FAr, FAI an der Vorderachse 6A (oder allgemein an der lenkbaren Fahrzeugachse) radindividuell beeinflussenden Komponente des Fahrzeuges 1 vorliegt. Dadurch wird ebenfalls ein Gieren des Fahrzeuges 1 mit einer bestimmten Brems-Gierrate GB bewirkt, das abhängig von der Spurweite SW der Vorderachse 6A ist und das in die Richtung der höheren Bremskraft FAr, FAI an der Vorderachse 6A ausgerichtet ist.

Wie auch bei einer mue-Split-Bremsung wird bei einem solchen einseitigen Defekt eine Lenkbewegung mit einem bestimmten Lenkwinkel L an der lenkbaren Vorderachse 6A induziert, wenn die Vorderräder 5Ar, 5Al unterschiedlich stark abgebremst werden. Die Lenkbewegung ist in dieselbe Richtung wie das Gieren des Fahrzeuges mit der Brems-Gierrate GB ausgerichtet, d.h. in die Richtung der höheren Bremskraft FAr, FAI an der Vorderachse 6A. Der induzierte Lenkwinkel L ist hierbei insbesondere abhängig von der sich einstellenden Bremsdruckdifferenz dp = pAl - pAr bzw. der Raddrehzahldifferenz dn = nAl - nAr oder einer daraus folgenden Radgeschwindigkeitsdifferenz dv = vAl - vAr zwischen den Radgeschwindigkeiten vAl, vAr der Vorderräder 5Al, 5Ar. Weiterhin ist der Lenkwinkel L abhängig von der Fahrzeuggeometrie, beispielsweise einem Lenkrollhalbmesser (Lenkrollradius).

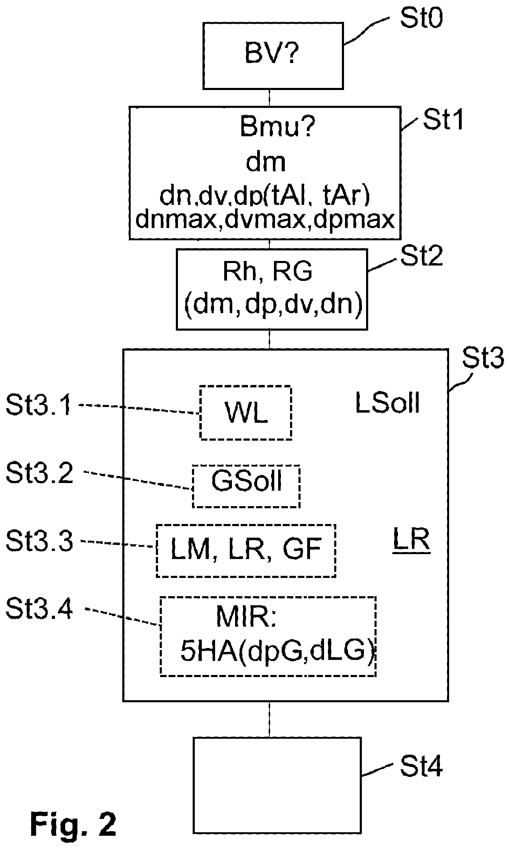

Bei einem soeben beschriebenen Defekt oder auch bei einer oben beschriebenen mue-Split-Bremsung Bmu bzw. allgemein bei unbeabsichtigten bzw. unerwarteten Bremsungen mit seitenweise unterschiedlichen Bremskräften FAr, FAI an der lenkbaren Vorderachse 6A, bei denen es jeweils zu einer Änderung des Lenkwinkels L kommt, ist es erforderlich, dass der Fahrer schnell und ausreichend über das Lenkrad 10 korrigierend eingreift, um insbesondere die Spur zu halten oder nicht von der Fahrbahn abzukommen, da es sonst zu einer Gefährdung des Fahrzeuges 1 sowie des umliegenden Verkehrs kommen kann. Um den Fahrer zu entlasten, da er auf derartige Situationen normalerweise nicht eingestellt ist und daher zu spät und/oder nicht ausreichend eingreift, ist erfindungsgemäß vorgesehen, über das Lenksystem 3 automatisiert über den Lenkaktuator 9 einzugreifen, sobald festgestellt wird, dass eine Bremsung mit seitenweise unterschiedlichen Bremskräften FAr, FAI an der lenkbaren Vorderachse 6A unerwartet und unbeabsichtigt eintritt:
Dies erfolgt gemäß Fig. 2, indem in einem anfänglichen Schritt St0 geprüft wird, ob eine manuelle oder automatisierte Bremsvorgabe BV vorliegt, und in einem darauffolgenden ersten Schnitt St1 geprüft wird, ob eine unbeabsichtigte Bremsung mit seitenweise unterschiedlichen Bremskräften FAr, FAI an der lenkbaren Fahrzeugachse, hier der Vorderachse 6A, vorliegt. Dies kann beispielsweise anhand der Bremsdruckdifferenz dp = pAl - pAr und/oder der Raddrehzahldifferenz dn = nAl - nAr und/oder der Radgeschwindigkeitsdifferenz dv = vAl - vAr erkannt werden.

Werden die Bremsdrücke pAl, pAr an der lenkbaren Vorderachse 6A und somit auch die Bremsdruckdifferenz dp nicht unmittelbar aus Messungen ermittelt, können diese abgeschätzt werden, wobei dies im Falle einer mue-split-Bremsung Bmu in Abhängigkeit der ABS-Steuersignale SAr, Sal erfolgen kann, die zu bestimmten Ansteuerzeiten tAr, tAl bzw. Regelzyklen der ABS-Steuerventile 8Ar, 8Al an der lenkbaren Vorderachse 6A führen. Aus diesen Ansteuerzeiten tAr, tAl kann zusammen mit einem bekannten Vordruck, der den ABS-Steuerventilen 8Ar, 8Al zugeführt wird, eine Bremsdruckdifferenz dp zumindest abgeschätzt werden, wobei zu erwarten ist, dass für das Niedrigreibwert-Vorderrad 5NA eine häufigere Ansteuerung und somit höhere Ansteuerzeiten tAr, tAl des jeweiligen ABS-Steuerventils 8Ar, 8Al vorliegen werden, da an diesem Niedrigreibwert-Vorderrad 5NA häufiger einzugreifen ist, um ein Blockieren zu verhindern als bei dem Hochreibwert-Vorderrad 5HA. Somit kann aus einer vorgegebenen maximalen Bremsdruckdifferenz dpmax auf eine Bremsung mit seitenweise unterschiedlichen Bremskräften geschlossen werden. Diese Abschätzung kann jedoch nur erfolgen, falls die ABS-Steuerventile 8Ar, 8Al an der Vorderachse 6A selbst nicht defekt und ursächlich für die seitenweise unterschiedlichen Bremskräfte FAr, FAI sind.

Eine andere Möglichkeit ist, die Raddrehzahlen nAl, nAr bzw. die Raddrehzahldifferenz dn, die direkt aus Raddrehzahlsignalen, die von Raddrehzahlsensoren 12Ar, 12Al an den Vorderrädern 5Ar, 5Al ausgegeben werden, zu ermitteln. Wird eine bestimmte vorgegebene maximale Raddrehzahldifferenz dnmax in Abstimmung mit der aktuell vorliegenden Bremsvorgabe BV an der lenkbaren Fahrzeugachse bzw. Vorderachse 6A überschritten, so wird auf eine unbeabsichtigte Bremsung mit seitenweise unterschiedlichen Bremskräften FAr, FAI an der lenkbaren Vorderachse 6A geschlossen. Aus den Raddrehzahlen nAl, nAr bzw. der Raddrehzahldifferenz dn kann alternativ auch die Radgeschwindigkeitsdifferenz dv = vAl - vAr ermittelt werden, die wiederum mit einer vorgegebenen maximalen Radgeschwindigkeitsdifferenz dvmax verglichen wird. Bei Überschreiten kann auch hier auf eine unbeabsichtigte Bremsung mit seitenweise unterschiedlichen Bremskräften FAr, FAI an der lenkbaren Vorderachse 6A geschlossen werden.

Die Ermittlung, ob eine unbeabsichtigte Bremsung mit seitenweise unterschiedlichen Bremskräften FAr, FAI an der lenkbaren Vorderachse 6A vorliegt, kann hierbei in der Bremssteuereinrichtung 2.1, insbesondere auch im Stabilitätsregelsystem 7 bzw. im ABS-Regelsystem 7.1, erfolgen.

In einem nachfolgenden zweiten Schritt St2 wird nach dem Feststellen, dass eine unbeabsichtigte Bremsung mit seitenweise unterschiedlichen Bremskräften FAr, FAI an der lenkbaren Vorderachse 6A vorliegt, ermittelt, in welche Gier-Richtung RG diese unbeabsichtigte Bremsung ausgerichtet ist bzw. in welche Gier-Richtung RG das Fahrzeug 1 aufgrund dieser unbeabsichtigten Bremsung voraussichtlich mit der Brems-Gierrate GB gieren wird. Dies folgt beispielsweise aus dem Vorzeichen der Raddrehzahldifferenz dn bzw. der Bremsdruckdifferenz dp bzw. der Radgeschwindigkeitsdifferenz dv, da für das Vorderrad 5Ar, 5Al mit der höheren Bremskraft FAr, FAI (im Falle einer mue-Split-Bremsung Bmu das Hochreibwert-Vorderrad 5HA) zumindest zeitweise ein geringerer Bremsdruck pAr, pAl bzw. eine geringere Raddrehzahl nAr, nAl bzw. eine geringere Radgeschwindigkeit vAr, vAl zu erwarten ist als für das Vorderrad 5Ar, 5Al mit der geringeren Bremskraft FAr, FAI. Je nachdem ist die Bremsdruckdifferenz dp = pAl - pAr bzw. die Raddrehzahldifferenz dn = nAl - nAr bzw. die Radgeschwindigkeitsdifferenz dv = vAl - vAr positiv oder negativ. Somit kann anhand dessen bereits vorausgesagt werden, in welche Gier-Richtung RG das Fahrzeug 1 gieren wird bzw. welches Vorzeichen die Brems-Gierrate GB haben wird.

In Abhängigkeit der Ausrichtung bzw. dem Vorzeichen der Brems-Gierrate GB bzw. der Gier-Richtung RG während der unbeabsichtigten Bremsung mit seitenweise unterschiedlichen Bremskräften FAr, FAI an der lenkbaren Vorderachse 6A wird anschließend in einem dritten Schritt St3 im Rahmen einer fortlaufenden Lenkregelung LG eine Lenkwinkel-Anforderung LSoll erzeugt und beispielsweise über die Lenksteuereinrichtung 3.1 in dem Lenksignal SL an den Lenkaktuator 9 ausgegeben. Die Lenkwinkel-Anforderung LSoll wird hierbei derartig festgelegt, dass der Brems-Gierrate GB entgegengewirkt wird. D.h. die Lenkwinkel-Anforderung LSoll führt zu einem Lenkwinkel L an der Vorderachse 6A, der die Brems-Gierrate GB kompensiert. Somit kann zeitgleich mit dem unbeabsichtigten Aufbau der seitenweise unterschiedlichen Bremskräfte FAr, FAI über die Lenkwinkel-Anforderung LSoll gegengelenkt werden, noch bevor sich eine Brems-Gierrate GB aufbauen wird.

Zu Beginn einer derartigen Lenkregelung LG kann in einem ersten Teilschritt St3.1 z.B. ein empirisch ermittelter Startwert WL für die Lenkwinkel-Anforderung LSoll angesetzt werden. Ausgehend davon wird anschließend in einem zweiten Teilschritt St3.2 fortlaufend eine Ist-Gierrate Glst des Fahrzeuges 1 überwacht und mit einer Soll-Gierrate GSoll verglichen, um die Reaktion des Fahrzeuges 1 auf die Lenkwinkel-Anforderung LSoll zu ermitteln. Solange eine Abweichung zwischen der Ist-Gierrate Glst und der Soll-Gierrate GSoll besteht, wird die Lenkwinkel-Anforderung LSoll weiter angepasst, bis die Ist-Gierrate Glst und die Soll-Gierrate GSoll innerhalb einer Toleranz übereinstimmen. Die Regelung kann hierbei beispielsweise nach Art eines PI-Reglers erfolgen, um eine schnelle aber auch "sanfte" Regelung ohne Sprünge zu erhalten. Die Ist-Gierrate Glst kann hierbei beispielsweise vom Stabilitätsregelsystem 7 bereitgestellt werden, das diese ohnehin für weitere Stabilitätsregelungen ermittelt, so dass keine weiteren Sensoren nötig sind.

Die Soll-Gierrate GSoll für diese Lenkregelung LG kann dabei derartig festgelegt werden, dass außerhalb einer unbeabsichtigten Bremsung mit seitenweise unterschiedlichen Bremskräften FAr, FAI an der lenkbaren Vorderachse 6A ständig die Ist-Gierrate Glst des Fahrzeuges 1 ermittelt und z.B. in einer Speichereinrichtung 13 gespeichert wird. Sobald im ersten Schritt St1 auf das Vorliegen einer unbeabsichtigten Bremsung mit seitenweise unterschiedlichen Bremskräften FAr, FAI an der lenkbaren Vorderachse 6A geschlossen wird, wird der vor dieser Feststellung zuletzt gespeicherte Wert der Ist-Gierrate Glst als Soll-Gierrate GSoll festgelegt und der Lenkregelung LG zugrunde gelegt. Dadurch können auch vom Fahrer ursprünglich vorgegebene Lenkbewegungen berücksichtigt werden, falls sich das Fahrzeug 1 bei einer solchen unbeabsichtigten Bremsung beispielsweise in einer Kurve oder beim Überholen befindet. Befindet sich das Fahrzeug 1 auf einer Geradeausfahrt, kann eine Soll-Gierrate GSoll von in etwa Null angenommen werden.

Stimmt die Ist-Gierrate Glst mit der Soll-Gierrate GSoll überein, wird die Lenkanforderung LSoll in einem vierten Schritt St4 beibehalten, da die Brems-Gierrate GB durch die aktive Lenkung automatisiert ausgeglichen bzw. kompensiert wird und das Fahrzeug 1 damit in der ursprünglichen Spur weiterfährt. Ein Verlassen der Spur oder der Fahrbahn sowie ggf. folgende Instabilitäten und damit eine Gefährdung des eigenen Fahrzeuges 1 sowie des umliegenden Verkehrs können somit durch diese Lenkregelung LG effizient vermieden werden.

Durch die beschriebene automatisierte Lenkregelung LG wird gewährleistet, dass ein Lenkeingriff über die Lenk-Anforderung LSoll sofort dann stattfindet, wenn eine unbeabsichtigten Bremsung mit seitenweise unterschiedlichen Bremskräften FAr, FAI eingeleitet wird und nicht erst dann, wenn das Fahrzeug 1 dadurch die Spur verlassen hat und ggf. bereits eine Instabilität entstanden ist. Dadurch kann der korrigierende Lenkeingriff geringer ausfallen, da der Brems-Gierrate GB gleich zu Beginn bei ihrer Entstehung entgegengewirkt wird und nicht erst dann, wenn das Fahrzeug 1 infolge dessen die Spur verlässt oder ausbricht. Die Abweichung von der ursprünglichen Spur kann dadurch deutlich reduziert werden. Die automatisierte Lenkung kann zudem aufgrund der elektronischen Regelung mit einer geringeren Reaktionszeit als bei einer manuellen Lenkung erfolgen, so dass die Gefahr von sicherheitskritischen Auswirkungen auf das eigene Fahrzeug 1 und den umgebenden Verkehr minimiert werden kann.

In einem dritten Teilschritt 3.3 kann bei der Lenkregelung LG weiterhin berücksichtigt werden, ob der Fahrer nachträglich lenkend eingreift, z.B. in Reaktion auf die unbeabsichtigte Bremsung mit seitenweise unterschiedlichen Bremskräften FAr, FAI und/oder durch Einleiten eines gebremsten Spurwechsels. Dazu kann beispielsweise über einen Kraftsensor 14, der mit einem Torsionsstab des Lenksystems 3 zusammenwirkt, ein vom Fahrer über das Lenkrad 10 aufgebrachtes Lenkmoment LM ermittelt werden. Eine Beeinflussung des Lenkwinkels L in Abhängigkeit dieses Lenkmomentes LM kann dann vom Lenksystem 3 zugelassen werden, wenn durch das Lenkmoment LM auf das Fahrzeug 1 eine Fahrer-Gierrate GF wirkt, die der Brems-Gierrate entgegengerichtet ist und diese wie auch die automatisierte Lenk-Anforderung LSoll kompensiert. Gibt der Fahrer also eine manuelle Lenkung in eine Lenkrichtung LR vor, die der Lenkrichtung LR des Lenkaktuators 9 entspricht, wird dies zugelassen. Lenkt der Fahrer allerdings in die entgegengesetzte Lenkrichtung LR, d.h. die Fahrer-Gierrate GF verstärkt die Brems-Gierrate GB, so kann eine Umsetzung durch das Lenksystem 3 verhindert werden, um keine Instabilitäten oder kein Spurverlassen zu riskieren.

Ergänzend kann in einem vierten Teilschritt St3.4 bei Vorliegen einer mue-Split-Bremsung Bmue als unbeabsichtigte Bremsung mit seitenweise unterschiedlichen Bremskräften FAr, FAI vorgesehen sein, dass eine Anpassung der ABS-Bremsregelung im ABS-Regelsystem 7.1 erfolgt, wobei dadurch ein Bremsweg des Fahrzeuges 1 während einer mue-Split-Bremsung Bmu verkürzt werden kann. Die ABS-Bremsregelung kann während einer mue-split-Bremsung Bmu normalerweise gemäß einer modifizierten Individualregelung (MIR) erfolgen. Dazu wird bei Erkennen einer mue-Split-Bremsung Bmu der Bremsdruck pAr, pAl an dem Hochreibwert-Vorderrad 5HA zunächst auf den Bremsdruck pAR, pAl abgesenkt, der an dem NiedrigReibwert-Vorderrad 5NA eingestellt ist, so dass eine Brems-Gierrate GB von Null vorliegt. Um dadurch keine Bremskraft zu verlieren, wird der Bremsdruck pAr, pAl an dem Hochreibwert-Vorderrad 5HA an-schließend wieder langsam mit einem Druckaufbaugradienten dpG bis zur Schlupfschwelle erhöht. Der Druckaufbaugradient dpG ist dabei normaler-weise derartig festgelegt, dass der Fahrer die Möglichkeit hat, auf die daraus resultierende Brems-Gierrate GB zu reagieren.

Da in der erfindungsgemäßen Lenkregelung LG gemäß den Schritten St3, St3.1, St3.2, St3.3 allerdings eine automatisierte Lenkregelung LG über den Lenkaktuator 9 erfolgt, ist davon auszugehen, dass eine sehr schnelle und ausreichende Reaktion auf eine Druckerhöhung am Hochreibwert-Vorderrad 5HA im Rahmen der MIR erfolgen kann. Infolgedessen kann der Druckaufbaugradient dpG entsprechend erhöht werden, da auf die daraus resultierende schnell ansteigende Brems-Gierrate GB über den Lenkaktuator 9 mit einem darauf abgestimmten Lenkgradienten dLG auch schnell reagiert werden kann. Dadurch kann der Bremsweg gegenüber einer normalen MIR verkürzt werden, da der Bremsdruck pAr, pAl am Hochreibwert-Vorderrad 5HA schneller wieder angehoben werden kann. Gleichzeitig kann das Fahrzeug 1 durch die schnelle und automatisierte Anpassung des Lenkwinkels L mit einem entsprechend hohen Lenkgradienten dLG in der Spur gehalten werden, so dass sich daraus ein kombinatorischer Effekt gegenüber dem Stand der Technik ergibt.

Außerdem kann allgemein im Rahmen der Lenkregelung LG vorgesehen sein, dass die Lenkwinkel-Anforderung LSoll in Abhängigkeit weiterer Kriterien festgelegt wird, wobei beispielsweise die Achslast KL auf der jeweiligen Fahrzeugachse 6A, 6B, die Auswahl der verwendeten Bereifung KB, eine Spurweite SW und ein Lenkrollhalbmesser der Vorderachse 6A, die Fahrzeuggeschwindigkeit v sowie eine Fahrbahnbeschaffenheit KF der Fahrbahn 11 als Kriterien herangezogen werden können.

Das soeben beschriebene Verfahren zur Steuerung des Fahrzeuges 1 über das Steuersystem 100 kann hierbei in der Bremssteuereinrichtung 2.1 des Bremssystems 2, insbesondere als Teil des Stabilitätsregelsystems 7, durch-geführt werden. Dazu kann das Stabilitätsregelsystem 7 softwareseitig und/oder hardwareseitig entsprechend erweitert werden. Der Bremssteuer-einrichtung 2.1 stehen dabei ein Großteil der verwendeten Kenngrößen über einen CAN-Bus im Fahrzeug 1 bereits zur Verfügung und auch eine Verbindung zu einem elektrischen Lenksystem 3 kann bereits vorhanden sein, so dass nur geringe Anpassungen notwendig sind.

### Bezugszeichenliste (Teil der Beschreibung)

- 1: Fahrzeug
- 2: elektronisch steuerbares Bremssystem
- 2.1: Bremssteuereinrichtung
- 3: elektronisch steuerbares Lenksystem
- 3.1: Lenksteuereinrichtung
- 4Ar, 4Al: Radbremsen der Vorderachse (rechts, links)
- 4Br, 4Bl: Radbremsen der Hinterachse (rechts, links)
- 5Ar, 5Al: Vorderräder (rechts, links)
- 5Br, 5Bl: Hinterräder (rechts, links)
- 5HA: Hochreibwert-Vorderrad
- 5NA: Niedrigreibwert-Vorderrad
- 6A: Vorderachse
- 6B: Hinterachse
- 7: Stabilitätsregelsystem
- 7.1: ABS-Regelsystem
- 8Ar, 8Al: ABS-Steuerventile an der Vorderachse
- 8Br, 8Bl: ABS-Steuerventile an der Hinterachse
- 9: Lenkaktuator
- 10: Lenkrad
- 11: Fahrbahn
- 12Ar, 12Al: Raddrehzahlsensoren an den Vorderrädern
- 12Br, 12Bl: Raddrehzahlsensoren an den Hinterrädern
- 13: Speichervorrichtung
- 14: Kraftsensor
- 15Ar, 15Al: Radlager der Vorderräder 5Ar, 5Al
- 100: Steuersystem
- Bmu: mue-Split-Bremsung
- BV: Bremsvorgabe
- dLG: Lenkgradient
- dm: Reibwert-Differenz
- dn: Raddrehzahldifferenz
- dnmax: maximal Raddrehzahldifferenz
- dp: Bremsdruckdifferenz
- dpmax: maximale Bremsdruckdifferenz
- dpG: Druckaufbaugradient
- dv: Radgeschwindigkeitsdifferenz
- dvmax: maximale Radgeschwindigkeitsdifferenz
- FAr, FAI: Bremskraft an den Vorderrädern
- FBr, FBI: Bremskraft an den Hinterrädern
- GB: Brems-Gierrate
- GF: Fahrer-Gierrate
- Glst: Ist-Gierrate
- GSoll: Soll-Gierrate
- KB: Bereifung
- KF: Fahrbahnbeschaffenheit
- KL: Achslast
- L: Lenkwinkel
- LG: Lenkregelung
- LM: Lenkmoment
- LR: Lenkrichtung
- LSoll: Lenkwinkel-Anforderung
- mr, ml: Fahrbahn-Reibwert (rechts, links)
- nAr, nAl: Raddrehzahlen der Vorderräder (rechts, links)
- nBr, nBI: Raddrehzahlen der Hinterräder (rechts, links)
- pAr, pAl: Bremsdruck an den Vorderrädern (rechts, links)
- pBr, pBl: Bremsdruck an den Hinterrädern (rechts, links)
- RG: Gier-Richtung
- Rh: Hochreibwert-Richtung
- SAr, SAI: ABS-Steuersignale an der Vorderachse (rechts, links)
- SBr, SBI: ABS-Steuersignale an der Hinterachse (rechts, links)
- SL: Lenksignal
- SW: Spurweite
- tAr, tAl: Ansteuerzeiten der ABS-Steuerventile
- v: Fahrzeuggeschwindigkeit
- vAr, vAl: Radgeschwindigkeit der Vorderräder (rechts, links)
- WL: Startwert für die Lenkwinkel-Anforderung LSoll

## Patentansprüche

1. Verfahren zum Steuern eines Fahrzeuges (1) bei einer unerwarteten Bremsung mit seitenweise unterschiedlich wirkenden Bremskräften (FAr, FAI) an einer lenkbaren Fahrzeugachse (6A), mit mindestens den folgenden Schritten:
- Feststellen, ob eine unbeabsichtigte Bremsung mit seitenweise unterschiedlich wirkenden Bremskräften (FAr, FAI) an der lenkbaren Fahrzeugachse (6A) vorliegt (St1),
wobei das Fahrzeug (1) aufgrund der seitenweise unterschiedlich wirkenden Bremskräfte (FAr, FAI) an der lenkbaren Fahrzeugachse (6A) mit einer Brems-Gierrate (GB) in eine Gier-Richtung (RG) giert;
- Ermitteln der Gier-Richtung (RG), in die das Fahrzeug (1) infolge der seitenweise unterschiedlich wirkenden Bremskräfte (FAr, FAI) gieren wird (St2);
- Vorgeben und Einstellen einer Lenkwinkel-Anforderung (LSoll) sobald eine unbeabsichtigte Bremsung mit seitenweise unterschiedlich wirkenden Bremskräften (FAr, FAI) an der lenkbaren Fahrzeugachse (6A, 6B) festgestellt wird,
wobei die Lenkwinkel-Anforderung (LSoll) in Abhängigkeit der ermittelten Gier-Richtung (RG) derartig vorgegeben wird, dass die Brems-Gierrate (GB) nach einem Einstellen der Lenkwinkel-Anforderung (LSoll) an der lenkbaren Fahrzeugachse (6A) kompensiert wird (St3, St4), **dadurch gekennzeichnet, dass**
die Lenkwinkel-Anforderung (LSoll) in Abhängigkeit einer Bereifung (KB) des Fahrzeuges (1) und/oder einer Fahrbahnbeschaffenheit (KF) und/oder einer Achslast (KL) und/oder einer Spurweite (SW) der lenkbaren Fahrzeugachse (6A) vorgegeben wird.

2. Verfahren nach Anspruch 1, **dadurch gekennzeichnet, dass** eine unbeabsichtigte Bremsung mit seitenweise unterschiedlich wirkenden Bremskräften (FAr, FAI) an der lenkbaren Vorderachse (6A) festgestellt wird.

3. Verfahren nach Anspruch 1 oder 2, **dadurch gekennzeichnet, dass** eine unbeabsichtigte Bremsung mit seitenweise unterschiedlich wirkenden Bremskräften (FAr, FAI) an der lenkbaren Fahrzeugachse (6A) lediglich bei Vorliegen einer Bremsvorgabe (BV) festgestellt wird.

4. Verfahren nach einem der vorhergehenden Ansprüche, **dadurch gekennzeichnet, dass** die Lenkwinkel-Anforderung (LSoll) an der lenkbaren Fahrzeugachse (6A) im Rahmen einer Lenkregelung (LG) derartig vorgegeben und eingestellt wird, dass sich eine aktuell vorliegende Ist-Gierrate (Glst) an eine vorgegebene Soll-Gierrate (GSoll) annähert, insbesondere bis die Ist-Gierrate (Glst) der vorgegebenen Soll-Gierrate (GSoll) entspricht.

5. Verfahren nach Anspruch 4, **dadurch gekennzeichnet, dass** die Soll-Gierrate (GSoll) aus einer Ist-Gierrate (Glst) abgeleitet wird, die im Fahrzeug (1) vorliegt, bevor eine unerwartete Bremsung mit seitenweise unterschiedlich wirkenden Bremskräften (FAr, FAI) an einer lenkbaren Fahrzeugachse (6A) festgestellt wurde.

6. Verfahren nach einem der vorhergehenden Ansprüche, **dadurch gekennzeichnet, dass** das Feststellen, ob eine unerwartete Bremsung mit seitenweise unterschiedlich wirkenden Bremskräften (FAr, FAI) an einer lenkbaren Fahrzeugachse (6A) vorliegt
- in Abhängigkeit einer Bremsdruckdifferenz (dp) zwischen Bremsdrücken (pAr, pAl) an den seitenweise unterschiedlich gebremsten Rädern (5Ar, 5Al) der lenkbaren Fahrzeugachse (6A) erfolgt und/oder
- in Abhängigkeit einer Raddrehzahldifferenz (dn) zwischen Raddrehzahlen (nAr, nAl) an den seitenweise unterschiedlich gebremsten Rädern (5Ar, 5Al) der lenkbaren Fahrzeugachse (6A) und/oder
- in Abhängigkeit einer Radgeschwindigkeitsdifferenz (dv) zwischen Radgeschwindigkeiten (vAr, vAl) an den seitenweise unterschiedlich gebremsten Rädern (5Ar, 5Al) der lenkbaren Fahrzeugachse (6A) erfolgt.

7. Verfahren nach Anspruch 6, **dadurch gekennzeichnet, dass** auf eine unerwartete Bremsung mit seitenweise unterschiedlich wirkenden Bremskräften (FAr, FAI) an einer lenkbaren Fahrzeugachse (6A) geschlossen wird, wenn die Bremsdruckdifferenz (dp) eine maximale Bremsdruckdifferenz (dpmax) und/oder die Raddrehzahldifferenz (dn) eine maximale Raddrehzahldifferenz (dnmax) und/oder die Radgeschwindigkeitsdifferenz (dv) eine maximale Radgeschwindigkeitsdifferenz (dvmax) übersteigt.

8. Verfahren nach Anspruch 6 oder 7, **dadurch gekennzeichnet, dass** das Ermitteln der Gier-Richtung (RG) in Abhängigkeit der Bremsdruckdifferenz (dp) und/oder der Raddrehzahldifferenz (dn) und/oder der Radgeschwindigkeitsdifferenz (dv) erfolgt.

9. Verfahren nach einem der Ansprüche 6 bis 8, **dadurch gekennzeichnet, dass** die Bremsdruckdifferenz (dp) aus ABS-Steuersignalen (SAr, SAl, SBr, SBl) abgeschätzt wird, wobei die an die Radbremsen (4Ar, 4Al, 4Br, 4Bl) ausgesteuerten Bremsdrücke (pAr, pAl, pBr, pBI) über ABS-Steuerventile (8Ar, 8Al, 8Br, 8Bl) in Abhängigkeit der ABS-Steuersignale (SAr, SAI, SBr, SBl) seitenindividuell angepasst werden zum Ausbilden der Bremsdruckdifferenz (dp), und/oder die Raddrehzahldifferenz (dn) und/oder die Radgeschwindigkeitsdifferenz (dv) aus über Raddrehzahlsensoren (12Ar, 12Al, 12Br, 12Bl) an den einzelnen Rädern (5Ar, 5Al, 5Br, 5Bl) ermittelten und ausgegebenen Raddrehzahlen (nAr, nAl, nBr, nBl) ermittelt wird.

10. Verfahren nach einem der vorhergehenden Ansprüche, **dadurch gekennzeichnet, dass** die Lenkwinkel-Anforderung (LSoll) über ein elektrisch steuerbares Lenksystem (3) an einer lenkbaren Fahrzeugachse (6A) automatisiert umgesetzt wird.

11. Verfahren nach einem der vorhergehenden Ansprüche, **dadurch gekennzeichnet, dass** die Lenkwinkel-Anforderung (LSoll) in Abhängigkeit einer Fahrzeuggeschwindigkeit (v) vorgegeben wird.

12. Verfahren nach einem der vorhergehenden Ansprüche, **dadurch gekennzeichnet, dass** der Lenkwinkel (L) der lenkbaren Fahrzeugachse (6A) in Abhängigkeit eines über ein Lenkrad (10) eingesteuerten Lenkmomentes (LM) eingestellt werden kann, wobei infolge des eingesteuerten Lenkmomentes (LM) eine Fahrer-Gierrate (GF) auf das Fahrzeug (1) wirkt, wobei das eingesteuerte Lenkmoment (LM) zugelassen wird, wenn die wirkende Fahrer-Gierrate (GF) der Brems-Gierrate (GB) entgegengerichtet ist und sonst unterdrückt wird.

13. Verfahren nach einem der vorhergehenden Ansprüche, **dadurch gekennzeichnet, dass** die unerwartete Bremsung mit seitenweise unterschiedlich wirkenden Bremskräften (FAr, FAI) an einer lenkbaren Fahrzeugachse (6A)
- aufgrund einer mue-Split-Bremsung (Bmu) und/oder
- aufgrund eines Defektes oder eines Ausfalls an zumindest einem der den gebremsten Rädern (5Ar, 5Al) der lenkbaren Fahrzeugachse (6A) zugeordneten ABS-Steuerventile (8Ar, 8Al) oder Radbremsen (4Ar, 4Al) und/oder
- aufgrund eines Defektes oder eines Ausfalls an zumindest einem Radlager (15Ar, 15Al) der gebremsten Rädern (5Ar, 5Al) der lenkbaren Fahrzeugachse (6A) und/oder
- aufgrund eines Defektes oder eines Ausfall an einer die Bremskraft (FAr, FAI) an der lenkbaren Fahrzeugachse (6A) radindividuell beeinflussenden Komponente des Fahrzeuges 1 vorliegt.

14. Steuersystem (100) zum Steuern eines Fahrzeuges (1) bei einer unerwarteten Bremsung mit seitenweise unterschiedlich wirkenden Bremskräften (FAr, FAI) an einer lenkbaren Fahrzeugachse (6A), insbesondere gemäß dem Verfahren nach einem der vorhergehenden Ansprüche, mit einem elektronisch steuerbaren Bremssystem (2) und einem elektronisch steuerbaren Lenksystem (3) zum Einstellen einer Lenkwinkel-Anforderung (LSoll) an einer lenkbaren Fahrzeugachse (6A),
wobei das Steuersystem (100) ausgebildet ist,
- Festzustellen, ob eine unbeabsichtigte Bremsung mit seitenweise unterschiedlich wirkenden Bremskräften (FAr, FAI) an einer lenkbaren Fahrzeugachse (6A) vorliegt, und die Gier-Richtung (RG), in die das Fahrzeug (1) infolge der seitenweise unterschiedlich wirkenden Bremskräfte (FAr, FAI) giert, zu ermitteln; und
- eine Lenkwinkel-Anforderung (LSoll) vorzugeben und über das elektronisch steuerbare Lenksystem (3) einzustellen sobald eine unbeabsichtigte Bremsung mit seitenweise unterschiedlich wirkenden Bremskräften (FAr, FAI) an der lenkbaren Fahrzeugachse (6A, 6B) festgestellt wurde,
wobei die Lenkwinkel-Anforderung (LSoll) in Abhängigkeit der ermittelten Gier-Richtung (RG) derartig vorgegeben werden kann, dass die Brems-Gierrate (GB) nach einem Einstellen der Lenkwinkel-Anforderung (LSoll) an einer lenkbaren Fahrzeugachse (6A) kompensiert werden kann, **dadurch gekennzeichnet, dass** die Lenkwinkel-Anforderung (LSoll) in Abhängigkeit einer Bereifung (KB) des Fahrzeuges (1) und/oder einer Fahrbahnbeschaffenheit (KF) und/oder einer Achslast (KL) und/oder einer Spurweite (SW) der lenkbaren Fahrzeugachse (6A) vorgegeben wird.

15. Fahrzeug (1) mit einem Steuersystem (100) nach Anspruch 14.

## Claims

1. Method for controlling a vehicle (1) during unexpected braking with braking forces (FAr, FAI) acting differently on each side on a steerable vehicle axle (6A), comprising at least the following steps:
- determining whether there is unintentional braking with braking forces (FAr, FAI) acting differently on each side on the steerable vehicle axle (6A) (St1),
the vehicle (1) yawing in a yaw direction (RG) at a braking yaw rate (GB) due to the braking forces (FAr, FAI) acting differently on each side on the steerable vehicle axle (6A);
- determining the yaw direction (RG) in which the vehicle (1) will yaw as a result of the braking forces (FAr, FAI) acting differently on each side (St2);
- specifying and setting a steering angle requirement (LSoll) as soon as unintentional braking with braking forces (FAr, FAI) acting differently on each side on the steerable vehicle axle (6A, 6B) is determined,
the steering angle requirement (LSoll) being specified depending on the determined yaw direction (RG) in such a way that the braking yaw rate (GB) is compensated for (St3, St4) after setting the steering angle requirement (LSoll) on the steerable vehicle axle (6A), **characterized in that**
the steering angle requirement (LSoll) is specified depending on the tires (KB) of the vehicle (1) and/or the road conditions (KF) and/or an axle load (KL) and/or a track width (SW) of the steerable vehicle axle (6A).

2. Method according to claim 1, **characterized in that** unintentional braking with braking forces (FAr, FAI) acting differently on each side on the steerable front axle (6A) is determined.

3. Method according to either claim 1 or claim 2, **characterized in that** unintentional braking with braking forces (FAr, FAI) acting differently on each side on the steerable vehicle axle (6A) is only determined when a braking specification (BV) is present.

4. Method according to any of the preceding claims, **characterized in that** the steering angle requirement (LSoll) on the steerable vehicle axle (6A) is specified and set within the scope of a steering control (LG) such that a currently present actual yaw rate (Gist) approaches a specified target yaw rate (GSoll), in particular until the actual yaw rate (Gist) corresponds to the specified target yaw rate (GSoll).

5. Method according to claim 4, **characterized in that** the target yaw rate (GSoll) is derived from an actual yaw rate (Glst) which is present in the vehicle (1) before unexpected braking with braking forces (FAr, FAI) on a steerable vehicle axle (6A) was detected.

6. Method according to any of the preceding claims, **characterized in that** determining whether unexpected braking with braking forces (FAr, FAI) acting differently on each side on a steerable vehicle axle (6A) takes place
- depending on a brake pressure difference (dp) between brake pressures (pAr, pAI) on the wheels (5Ar, 5Al) of the steerable vehicle axle (6A), which wheels are braked differently on each side, and/or
- depending on a wheel rotational-speed difference (dn) between wheel speeds (nAr, nAI) on the wheels (5Ar, 5Al) of the steerable vehicle axle (6A), which wheels are braked differently on each side, and/or
- depending on a wheel speed difference (dv) between wheel speeds (vAr, vAl) on the wheels (5Ar, 5Al) of the steerable vehicle axle (6A), which wheels are braked differently on each side.

7. Method according to claim 6, **characterized in that** unexpected braking with braking forces (FAr, FAI) acting differently on each side on a steerable vehicle axle (6A) is inferred if the brake pressure difference (dp) exceeds a maximum brake pressure difference (dpmax) and/or the wheel rotational-speed difference (dn) exceeds a maximum wheel-rotational speed difference (dnmax) and/or the wheel speed difference (dv) exceeds a maximum wheel speed difference (dvmax).

8. Method according to either claim 6 or claim 7, **characterized in that** the yaw direction (RG) is determined depending on the brake pressure difference (dp) and/or the wheel rotational-speed difference (dn) and/or the wheel speed difference (dv).

9. Method according to any of claims 6 to 8, **characterized in that** the brake pressure difference (dp) is estimated from ABS control signals (SAr, SAI, SBr, SBI), the brake pressures (pAr, pAI, pBr, pBI) applied to the wheel brakes (4Ar, 4Al, 4Br, 4BI) being side-specifically adapted via ABS control valves (8Ar, 8Al, 8Br, 8BI) depending on the ABS control signals (SAr, SAI, SBr, SBl) in order to form the brake pressure difference (dp), and/or the wheel rotational-speed difference (dn) and/or the wheel speed difference (dv) is determined from wheel rotational speeds (nAr, nAl, nBr, nBI) which are determined on the individual wheels (5Ar, 5Al, 5Br, 5BI) and output via wheel rotational-speed sensors (12Ar, 12Al, 12Br, 12BI).

10. Method according to any of the preceding claims, **characterized in that** the steering angle requirement (LSoll) is automatically implemented via an electrically controllable steering system (3) on a steerable vehicle axle (6A).

11. Method according to any of the preceding claims, **characterized in that** the steering angle requirement (LSoll) is specified depending on a vehicle speed (v).

12. Method according to any of the preceding claims, **characterized in that** the steering angle (L) of the steerable vehicle axle (6A) can be set depending on a steering torque (LM) controlled via a steering wheel (10), a driver yaw rate (GF) acting on the vehicle (1) as a result of the controlled steering torque (LM), the controlled steering torque (LM) being permitted when the acting driver yaw rate (GF) is opposite to the braking yaw rate (GB) and is otherwise suppressed.

13. Method according to any of the preceding claims, **characterized in that** unexpected braking with braking forces (FAr, FAI) acting differently on each side on a steerable vehicle axle (6A) takes place
- due to split braking (Bmu) and/or
- due to a defect or a failure of at least one of the ABS control valves (8Ar, 8Al) or wheel brakes (4Ar, 4Al) associated with the braked wheels (5Ar, 5Al) of the steerable vehicle axle (6A), and/or
- due to a defect or a failure of at least one wheel bearing (15Ar, 15Al) of the braked wheels (5Ar, 5Al) of the steerable vehicle axle (6A), and/or
- due to a defect or failure of a component of the vehicle 1 that influences the braking force (FAr, FAI) on the steerable vehicle axle (6A) in a wheel-specific manner.

14. Control system (100) for controlling a vehicle (1) during unexpected braking with braking forces (FAr, FAI) acting differently on each side on a steerable vehicle axle (6A), in particular as per the method according to any of the preceding claims, which control system has an electronically controllable brake system (2) and an electronically controllable steering system (3) for setting a steering angle requirement (LSoll) on a steerable vehicle axle (6A),
the control system (100) being designed
- to determine whether there is unintentional braking with braking forces (FAr, FAI) acting differently on each side on a steerable vehicle axle (6A), and to determine the yaw direction (RG) in which the vehicle (1) yaws due to the braking forces (FAr, FAI) acting differently on each side; and
- to specify a steering angle requirement (LSoll) and to set it via the electronically controllable steering system (3) as soon as unintentional braking with braking forces (FAr, FAI) on each side on the steerable vehicle axles (6A, 6B) has been determined,
the steering angle requirement (LSoll) being specifiable depending on the determined yaw direction (RG) in such a way that the braking yaw rate (GB) can be compensated for after setting the steering angle requirement (LSoll) on a steerable vehicle axle (6A), **characterized in that** the steering angle requirement (LSoll) is specified depending on the tires (KB) of the vehicle (1) and/or the road conditions (KF) and/or an axle load (KL) and/or a track width (SW) of the steerable vehicle axle (6A).

15. Vehicle (1) having a control system (100) according to claim 14.

## Revendications

1. Procédé permettant la commande d'un véhicule (1) lors d'un freinage inattendu avec des forces de freinage (FAr, FAl) agissant différemment d'un côté à l'autre sur un essieu de véhicule dirigeable (6A), comportant au moins les étapes suivantes :
- détection du fait de savoir si un freinage involontaire avec des forces de freinage (FAr, FAl) agissant différemment d'un côté à l'autre sur l'essieu de véhicule dirigeable (6A) est présent (St1),
dans lequel, en raison des forces de freinage (FAr, FAl) agissant différemment d'un côté à l'autre sur l'essieu de véhicule dirigeable (6A), le véhicule (1) effectue un mouvement de lacet à un taux de lacet de freinage (GB) dans une direction de lacet (RG) ;
- détermination de la direction de lacet (RG) dans laquelle le véhicule (1) effectue un mouvement de lacet (St2) en raison des forces de freinage (FAr, FAl) agissant différemment d'un côté à l'autre ;
- prédéfinition et réglage d'une demande d'angle de braquage (LSoll) dès qu'un freinage involontaire avec des forces de freinage (FAr, FAl) agissant différemment d'un côté à l'autre sur l'essieu de véhicule dirigeable (6A, 6B) est détecté,
dans lequel la demande d'angle de braquage (LSoll) est prédéfinie en fonction de la direction de lacet (RG) déterminée, de telle sorte que le taux de lacet de freinage (GB) est compensé (St3, St4) après un réglage de la demande d'angle de braquage (LSoll) sur l'essieu de véhicule dirigeable (6A),
**caractérisé en ce que**
la demande d'angle de braquage (LSoll) est prédéfinie en fonction des pneumatiques (KB) du véhicule (1) et/ou d'une texture de la chaussée (KF) et/ou d'une charge par essieu (KL) et/ou d'une largeur de voie (SW) de l'essieu de véhicule dirigeable (6A).

2. Procédé selon la revendication 1, **caractérisé en ce qu'**un freinage involontaire avec des forces de freinage (FAr, FAl) agissant différemment d'un côté à l'autre sur l'essieu avant dirigeable (6A) est détecté.

3. Procédé selon la revendication 1 ou 2, **caractérisé en ce qu'**un freinage involontaire avec des forces de freinage (FAr, FAl) agissant différemment d'un côté à l'autre sur l'essieu de véhicule dirigeable (6A) est détecté uniquement en présence d'une consigne de freinage (BV).

4. Procédé selon l'une des revendications précédentes,
**caractérisé en ce que** la demande d'angle de braquage (LSoll) sur l'essieu de véhicule dirigeable (6A) est prédéfinie et réglée dans le cadre d'une régulation de direction (LG), de telle sorte qu'un taux de lacet réel (Glst) actuellement présent se rapproche d'un taux de lacet de consigne (GSoll) prédéfini, en particulier jusqu'à ce que le taux de lacet réel (Glst) corresponde au taux de lacet de consigne (GSoll) prédéfini.

5. Procédé selon la revendication 4, **caractérisé en ce que** le taux de lacet de consigne (GSoll) est dérivé d'un taux de lacet réel (Glst) qui est présent dans le véhicule (1) avant qu'un freinage inattendu avec des forces de freinage (FAr, FAl) agissant différemment d'un côté à l'autre sur un essieu de véhicule dirigeable (6A) ait été détecté.

6. Procédé selon l'une des revendications précédentes,
**caractérisé en ce que** la détection du fait de savoir si un freinage inattendu avec des forces de freinage (FAr, FAl) agissant différemment d'un côté à l'autre sur un essieu de véhicule dirigeable (6A) est présent
- est effectuée en fonction d'une différence de pression de freinage (dp) entre des pressions de freinage (pAr, pAl) sur les roues (5Ar, 5Al) freinées différemment d'un côté à l'autre de l'essieu de véhicule dirigeable (6A) et/ou
- est effectuée en fonction d'une différence de vitesse de rotation de roue (dn) entre des vitesses de rotation de roues (nAr, nAl) sur les roues (5Ar, 5Al) freinées différemment d'un côté à l'autre de l'essieu de véhicule dirigeable (6A) et/ou
- est effectuée en fonction d'une différence de vitesse de roue (dv) entre des vitesses de roues (vAr, vAl) sur les roues (5Ar, 5Al) freinées différemment d'un côté à l'autre de l'essieu de véhicule dirigeable (6A).

7. Procédé selon la revendication 6, **caractérisé en ce que** l'on conclut à un freinage inattendu avec des forces de freinage (FAr, FAl) agissant différemment d'un côté à l'autre sur un essieu de véhicule dirigeable (6A) lorsque la différence de pression de freinage (dp) dépasse une différence de pression de freinage maximale (dpmax) et/ou la différence de vitesse de rotation de roue (dn) dépasse une différence de vitesse de rotation de roue maximale (dnmax) et/ou la différence de vitesse de roue (dv) dépasse une différence de vitesse de roue maximale (dvmax).

8. Procédé selon la revendication 6 ou 7, **caractérisé en ce que** la détermination de la direction de lacet (RG) est effectuée en fonction de la différence de pression de freinage (dp) et/ou de la différence de vitesse de rotation de roue (dn) et/ou de la différence de vitesse de roue (dv).

9. Procédé selon l'une des revendications 6 à 8, **caractérisé en ce que** la différence de pression de freinage (dp) est estimée à partir de signaux de commande ABS (SAr, SAl, SBr, SBl), dans lequel les pressions de freinage (pAr, pAl, pBr, pBl) appliquées sur les freins de roues (4Ar, 4Al, 4Br, 4Bl) sont adaptées côté par côté par l'intermédiaire de soupapes de commande ABS (8Ar, 8Al, 8Br, 8Bl) en fonction des signaux de commande ABS (SAr, SAl, SBr, SBl) pour former la différence de pression de freinage (dp), et/ou la différence de vitesse de rotation de roue (dn) et/ou la différence de vitesse de roue (dv) sont déterminées à partir de vitesses de rotation de roues (nAr, nAl, nBr, nBl) déterminées et transmises par l'intermédiaire de capteurs de vitesse de rotation de roue (12Ar, 12Al, 12Br, 12Bl) sur les différentes roues (5Ar, 5Al, 5Br, 5Bl).

10. Procédé selon l'une des revendications précédentes,
**caractérisé en ce que** la demande d'angle de braquage (LSoll) est mise en oeuvre de manière automatisée par l'intermédiaire d'un système de direction (3) pouvant être commandé électriquement sur un essieu de véhicule dirigeable (6A).

11. Procédé selon l'une des revendications précédentes,
**caractérisé en ce que** la demande d'angle de braquage (LSoll) est prédéfinie en fonction d'une vitesse de véhicule (v).

12. Procédé selon l'une des revendications précédentes,
**caractérisé en ce que** l'angle de braquage (L) de l'essieu de véhicule dirigeable (6A) peut être réglé en fonction d'un couple de braquage (LM) appliqué par l'intermédiaire d'un volant de direction (10), dans lequel, en raison du couple de braquage (LM) appliqué, un taux de lacet de conducteur (GF) agit sur le véhicule (1), dans lequel le couple de braquage (LM) appliqué est autorisé lorsque le taux de lacet de conducteur (GF) qui agit est opposé au taux de lacet de freinage (GB), et est supprimé dans le cas contraire.

13. Procédé selon l'une des revendications précédentes,
**caractérisé en ce que** le freinage inattendu avec des forces de freinage (FAr, FAl) agissant différemment d'un côté à l'autre sur un essieu de véhicule dirigeable (6A) est présent
- en raison d'un freinage mu-split (Bmu) et/ou
- en raison d'un défaut ou d'une défaillance au niveau d'au moins l'une des soupapes de commande ABS (8Ar, 8Al) ou l'un des freins de roues (4Ar, 4Al) associés aux roues (5Ar, 5Al) freinées de l'essieu de véhicule dirigeable (6A) et/ou
- en raison d'un défaut ou d'une défaillance au niveau d'au moins un roulement de roue (15Ar, 15Al) des roues (5Ar, 5Al) freinées de l'essieu de véhicule dirigeable (6A) et/ou
- en raison d'un défaut ou d'une défaillance au niveau d'un composant du véhicule (1), lequel composant influe roue par roue sur la force de freinage (FAr, FAl) sur l'essieu de véhicule dirigeable (6A).

14. Système de commande (100) permettant la commande d'un véhicule (1) lors d'un freinage inattendu avec des forces de freinage (FAr, FAl) agissant différemment d'un côté à l'autre sur un essieu de véhicule dirigeable (6A), en particulier conformément au procédé selon l'une des revendications précédentes, comportant un système de freinage (2) pouvant être commandé électroniquement et un système de direction (3) pouvant être commandé électroniquement et permettant le réglage d'une demande d'angle de braquage (LSoll) sur un essieu de véhicule dirigeable (6A),
dans lequel le système de commande (100) est configuré pour
- détecter si un freinage involontaire avec des forces de freinage (FAr, FAl) agissant différemment d'un côté à l'autre sur un essieu de véhicule dirigeable (6A) est présent, et déterminer la direction de lacet (RG) dans laquelle le véhicule (1) effectue un mouvement de lacet en raison des forces de freinage (FAr, FAl) agissant différemment d'un côté à l'autre ; et
- prédéfinir une demande d'angle de braquage (LSoll) et la régler par l'intermédiaire du système de direction (3) pouvant être commandé électroniquement dès qu'un freinage involontaire avec des forces de freinage (FAr, FAl) agissant différemment d'un côté à l'autre sur l'essieu de véhicule dirigeable (6A, 6B) a été détecté,
dans lequel la demande d'angle de braquage (LSoll) peut être prédéfinie en fonction de la direction de lacet (RG) déterminée, de telle sorte que le taux de lacet de freinage (GB) peut être compensé après un réglage de la demande d'angle de braquage (LSoll) sur un essieu de véhicule dirigeable (6A), **caractérisé en ce que** la demande d'angle de braquage (LSoll) est prédéfinie en fonction des pneumatiques (KB) du véhicule (1) et/ou d'une texture de la chaussée (KF) et/ou d'une charge par essieu (KL) et/ou d'une largeur de voie (SW) de l'essieu de véhicule dirigeable (6A).

15. Véhicule (1) comportant un système de commande (100) selon la revendication 14.
